Europäisches Patentamt

(19) European Patent Office

Office européen des brevets

(11) Publication number: **0 000 236**

**A1**

(12) **EUROPEAN PATENT APPLICATION**

(21) Application number: **78200073.1**

(22) Date of filing: **03.07.78**

(51) Int. Cl.²: **F 24 J 3/02**

(30) Priority: **01.07.77 NL 7707337**

(43) Date of publication of application:
**10.01.79 Bulletin 79/1**

(84) Designated Contracting States:
**BE CH DE FR GB LU NL SE**

(71) Applicant: **Economic Energy Systems Investment N.V.,
Kaminda Michigan 3,
Willemstad Curaçao Netherlands Antilles (NL)**

(72) Inventor: **Baardman, Maarten,
Hoogstuk 48,
Druten (NL)**

(74) Representative: **Hoijtink, Reinoud et al,
Sweelinckplein 1,
NL-2517 GK The Hague (NL)**

(54) **A method for controlling the energy balance of a system for catching, accumulating and transferring solar energy and a system therefor.**

(57) A method for controlling the energy balance of a system for catching, accumulating and transferring solar energy and a system therefor.

A system for catching, accumulating and transferring solar energy and a method for controlling said system, in which the system includes a closed fluid circuit (2) comprising a soar energy collector (1) and a heat accumulator (4) adapted to transfer its heat to an energy consuming apparatus and also includes means (5)(5') for measuring the temperature difference between the input and the output of the solar energy collector and using this temperature difference to i terrupt the fluid flow in said circuit, when the heat output of said collector exceeds the heat input.

FIG. 1

1

"A method for controlling the energy balance of
a system for catching, accumulating and transferring
solar energy and a system therefor"
-----------------------------------------------------------------

The invention relates to a method for controlling the energy balance of a system for catching, accumulating and transferring solar energy and to a system therefor, said system including a solar energy collector and a heat accumulator connected therewith, said method comprising the step of maintaining, in a closed circuit, a fluid flow for heat transport between the collector and the accumulator which transfers its heat to an energy consuming apparatus. With the aid of such a system solar energy, in the form of radiation as well as convection heat, can be caught and transformed into usable energy, e.g. for heating water for heating purposes and/or the supply of hot water and for cooling systems.

A situation can occur, e.g. during interruption of the sunshine, in which via the fluid flow the accumulator is delivering heat to the collector instead of absorbing heat therefrom, which causes the the heat contents of the accumulator to decrease. The invention avoids this unwanted phenomenon and it achieves this in that the difference between the heat input and the heat output from the solar energy collector is measured and the fluid flow is interrupted when the heat output exceeds the heat input. To that end the invention provides a system for catching, accumulating and transferring solar energy, said system comprising a closed circuit, of which a solar energy collector and a heat accumulator form parts and said accumulator is provided with means for transferring heat to an energy consuming apparatus. This system comprises also means for measuring the difference between the heat input to and the heat output from the solar energy collector and a control unit connected with the measuring means for controlling an element adapted to interrupt the closed circuit.

As the direction of the heat flow, i.e. the heat output from or the heat input to the accumulator, can be deduced from the temperature difference between the fluid intake and the fluid outlet of the solar energy collector, the measurement of the difference between said heat output and said heat input can advantageously be substituted by a measurement of the temperature difference between the fluid intake and the fluid outlet of the solar energy collector. For that purpose the measuring means may include two temperature sensors, of which one is located at the fluid intake and the other one at the fluid outlet of the solar energy collector.

In order to prevent the accumulator from being overheated during continuous heat input the fluid current flow could be interrupted when the temperature of the fluid in the heat accumulator exceeds a predetermined value.

The means to interrupt the closed circuit, may be formed by a pump. However, if natural circulation is used instead of forced circulation the pump may be replaced by a valve controlled by the control unit.

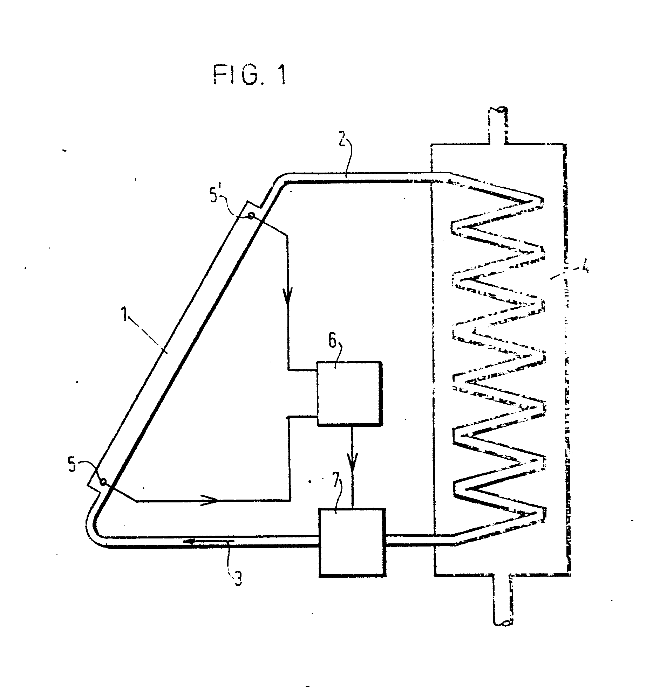

The invention will be elucidated with the aid of the drawing which shows by way of example an embodiment of the invention.

The drawing shows a system for catching, accumulating and transferring solar energy.

The solar energy, in the form of direct radiation as well as heat from the ambient air, is caught by the solar energy collector 1, which forms part of a closed circuit 2 through which a fluid 3, e.g. water, thermic oil or air, flows. The closed circuit further includes a heat accumulator 4, which is known per se and is adapted to transfer its heat to an energy consuming apparatus. Two temperature sensors 5, 5', of which one is located at the solar energy collector fluid intake and the other one is located at the outlet thereof, measure the temperature at said intake and said outlet, respectively. The electrical signals produced by said temperature sensors are fed into a control unit 6, which so controls a pump 7 as to ensure that the fluid flow is interrupted when the temperature at the fluid outlet is lower than the temperature at the fluid intake, i.e. when the solar energy collector is delivering heat instead of absorbing heat.

In order to prevent the heat accumulator from overheating the control unit 6 is able to interrupt the fluid flow 3, when the temperature of the fluid at the intake exceeds a predetermined value, i.e. when the fluid temperature in the heat accumulator becomes unwantedly high.

1

## CLAIMS

1. A method for controlling the energy balance of a system for catching, accumulating and transferring solar energy, said system including a solar energy collector and a heat accumulator connected therewith, said method comprising the step of maintaining, in a closed circuit, a fluid flow for heat transport between the collector and the accumulator, which transfers its heat to an energy consuming apparatus, characterized in that the difference between the heat input to and the heat output from the solar energy collector is measured and the fluid flow is interrupted when the heat output exceeds the heat input.

2. A method according to claim 1, characterized in that the temperature difference between the fluid intake and the fluid outlet of the solar energy collector is measured.

3. A method according to claim 2, characterized in that the fluid flow is interrupted when the temperature of the fluid in the heat accumulator exceeds a predetermined value.

4. A system for carrying out the method according to claim 1, comprising a closed circuit, of which a solar energy collector and a heat accumulator form parts and said accumulator is provided with means for transferring heat to an energy consuming apparatus, characterized in the provision of means for measuring the difference between the heat input to and the heat output from the solar energy collector and a control unit connected with the measuring means for controlling an element adapted to interrupt the closed circuit.

5. A system according to claim 4, characterized in that the measuring means include two temperature sensors, of which one is located at the fluid intake and the other one at the fluid outlet of the solar energy collector.

6. A system according to claim 4 or 5, characterized in that provided in the closed circuit is a pump, which is controlled by the control unit

7. A system according to claim 4, 5 or 6, characterized in that provided in the closed circuit is a valve, which is controlled by the control unit.

FIG. 1

## DOCUMENTS CONSIDERED TO BE RELEVANT

| Category | Citation of document with indication, where appropriate, of relevant passages | Relevant to claim |
|---|---|---|
| X | US - A - 3 986 489 (SCHLESINGER)<br><br>* Column 3, lines 9-68; column 4, lines 1-29; column 6, lines 64-68; column 7, line 1; figure 1 *<br><br>-- | 1-4,6,7 |
| X | FR - A - 1 138 587 (RADIASOL)<br><br>* The whole document *<br><br>-- | 1-4,6,7 |
| X | US - A - 2 575 478 (WILSON)<br><br>* Column 2, lines 49-55; column 3, lines 1-12; figure 1 *<br><br>-- | 1-4,6 |
| X | US - A - 4 019 495 (FRAZIER)<br><br>* Columns 1-3; figure 1 *<br><br>-- | 1,2,4,6 |
| | FR - A - 2 270 535 (MADERN)<br><br>* Page 2, lines 29-33; figure 1 *<br><br>-- | 1 |
| | US - A - 4 017 028 (MANOR)<br><br>* Column 1, lines 22-68; column 2, lines 1-43; figures 1 and 2 *<br><br>----- | 1,2 |

**CLASSIFICATION OF THE APPLICATION (Int. Cl.²)**

F 24 J 3...

**TECHNICAL FIELDS SEARCHED (Int.Cl.²)**

F 24 J 3/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-10-1978 | VE... |